# EUROPÄISCHE PATENTSCHRIFT

(11) **EP 3 652 030 B1**
(45) Veröffentlichungstag und Bekanntmachung des Hinweises auf die Patenterteilung: **25.08.2021**
(21) Anmeldenummer: 18737833.6
(22) Anmeldetag: 27.06.2018
(51) Int. Cl.: B60T 8/36

(54) **BISTABILES MAGNETVENTIL FÜR EIN HYDRAULISCHES BREMSSYSTEM UND VERFAHREN ZUR ANSTEUERUNG EINES SOLCHEN VENTILS**
BISTABLE SOLENOID VALVE FOR HYDRAULIC BRAKE SYSTEM AND METHOD OF ITS ACTUATION
ÉLECTROVANNE BISTABLE POUR FREIN HYDRAULIQUE ET MÉTHODE D'ACTIONNEMENT

(30) Priorität: 14.07.2017 DE 102017212084
(43) Veröffentlichungstag der Anmeldung: 20.05.2020
(73) Patentinhaber: Robert Bosch GmbH, 70442 Stuttgart (DE)
(72) Erfinder: STAHR, Wolf, 74232 Abstatt (DE); LANDESFEIND, Klaus, 71522 Backnang (DE); AMBROSI, Massimiliano, 74232 Abstatt (DE); EISENLAUER, Michael, 71563 Affalterbach (DE); KURZ, Edgar, 74081 Heilbronn-Horkheim (DE); SCHULLER, Wolfgang, 74389 Cleebronn (DE)
(86) Internationale Anmeldenummer: PCT/EP2018/067193
(87) Internationale Veröffentlichungsnummer: WO 2019/011652

(56) Entgegenhaltungen:
- EP-A1- 2 525 122
- DE-A1-102006 047 920
- DE-A1-102006 061 947
- DE-A1-102008 000 534
- US-A1- 2017 074 418

## Beschreibung

Die vorliegende Erfindung betrifft ein bistabiles Magnetventil für ein hydraulisches Bremssystem, mit einer Führungshülse in welche ein oberer und ein unterer unbewegter Polkern fest und ein Schließelement verlagerbar angeordnet ist, wobei das Schließelement während einer Schließbewegung in einen Ventilsitz drängt und während einer Öffnungsbewegung aus dem Ventilsitz abhebt und das Schließelement mit einem Permanentmagneten fest verbunden ist wobei der Permanentmagnet zwischen dem unteren und dem oberen Polkern positioniert ist und eine Spulengruppe um die Führungshülse positioniert ist und diese im Wesentlichen umfasst, wobei das Magnetventil dadurch gekennzeichnet ist, dass die Spulengruppe wenigstens zwei Spulen umfasst, wobei die Spulengruppe so ausgestaltet ist, dass mittels einer Aktivierung der wenigstens zwei Spulen eine Aktuierung einer Bewegung des Schließelements erfolgt.

### Stand der Technik

Magnetventile haben in der Hydraulikeinheit die Aufgabe das Druckmittel zu halten oder abströmen zu lassen. Typischerweise bestehen diese aus mehreren Magnetventilen. Bei Magnetventilen (MV) in ABS/TCS/ESP-Systemen von Kraftfahrzeugen werden für den geschlossenen Zustand bestimmte Anforderungen an die Dichtheit gestellt, die von der jeweiligen Aufgabe des MVs im System abhängig sind. Die Ventile sind im Allgemeinen so konzipiert, dass funktionsabhängig in einer stromlosen Schaltstellung eine Dauerstellung erzielt wird (bspw. stromlos "geschlossen") und nur für einen Kurzzeitbetrieb das Ventil bestromt wird (bspw. bestromt "offen").

Aus dem Stand der Technik sind weiterhin bistabile Ventile bekannt, die in zwei Schaltstellungen stromlos eine Dauerstellung erreichen und nur für den Schaltvorgang zwischen den Dauerstellungen bestromt werden. Beispielsweise sei hierfür auf die Patentanmeldung DE 10 2006 061 947 verwiesen.

Aus dem Stand der Technik ist weiterhin die EP 2 525 122 A1 bekannt. Diese Schrift beschreibt ein Elektromagnetventil für eine Verbrennungskraftmaschine mit einem Gehäuse, in dem zwei Spulen und ein Anker angeordnet sind, wobei der Anker zwischen zwei Endlagen beweglich gelagert ist und zumindest indirekt auf ein Ventilverschlussglied einwirkt, wobei eine Bestromung der Spulen eine Bewegung des Ankers in die erste oder in die zweite Endlage verursacht, wobei im unbestromten Zustand der Anker zumindest in einer Endlage durch einen Permanentmagneten fixiert ist, wobei die Spulen eine gegensinnige Wicklung aufweisen und der zweiten Spule ein erster Schaltkreis und der ersten Spule ein zweiter Schaltkreis zugeordnet ist und wobei zumindest ein Schaltelement zur Lagerückmeldung des Ankers vorgesehen ist, wobei in Abhängigkeit eines Schaltsignals der Lagerückmeldung des Schaltelementes der zu bestromende Schaltkreis voreingestellt ist

### Offenbarung der Erfindung

Vorteilhaft ermöglicht hingegen das erfindungsgemäße Ventil und das erfindungsgemäße Verfahren ein hochdynamisches und effizientes Schalten eines bistabilen Magnetventils auch bei tiefen Temperaturen.

Ermöglicht wird dies gemäß der Erfindung durch die in den unabhängigen Patentansprüchen angegebenen Merkmale. Weitere Ausgestaltungen der Erfindung sind Gegenstand von Unteransprüchen.

Das erfindungsgemäße bistabile Magnetventil für ein hydraulisches Bremssystem, mit einer Führungshülse in welche ein oberer und ein unterer unbewegter Polkern fest und ein Schließelement verlagerbar angeordnet ist, wobei das Schließelement während einer Schließbewegung in einen Ventilsitz drängt und während einer Öffnungsbewegung aus dem Ventilsitz abhebt und das Schließelement mit einem Permanentmagneten fest verbunden ist wobei der Permanentmagnet zwischen dem unteren und dem oberen Polkern positioniert ist und eine Spulengruppe um die Führungshülse positioniert ist und diese im Wesentlichen umfasst, ist dadurch gekennzeichnet, dass die Spulengruppe wenigstens zwei Spulen umfasst, wobei die Spulengruppe so ausgestaltet ist, dass mittels einer Aktivierung der wenigstens zwei Spulen eine Aktuierung einer Bewegung des Schließelements erfolgt.

Hierunter wird verstanden, dass das Magnetventil zwei Polkerne aufweist, zwischen welchen ein Permanentmagnet positioniert ist. Die Polkerne sind dabei in ihrer Position fest definiert und die Permanentmagnet zwischen den Polkernen axial beweglich. Der Permanentmagnet ist dabei fest mit dem Schließelement des Magnetventils verbunden. Das Schließelement, auch Dichtelement genannt, dient dazu in einer ersten Position den Durchgang am Ventilsitz freizugeben und damit das Ventil zu öffnen, bzw. in einer zweiten Position den Durchgang am Ventil zu versperren und damit das Ventil zu schließen. Das Magnetventil ist bistabil. Dies bedeutet, dass ein Halten des Schließelements in diesen zwei verschiedenen Stellungen (d.h. in der geschlossenen Stellung als auch in der geöffneten Stellung) ohne eine dauerhafte Bestromung erfolgen kann. Bei einem bistabilen Ventil wird durch die Bestromung der Spulen lediglich ein Umschalten des Schaltzustandes ermöglicht. Das Halten des Schließelements in der jeweiligen geschlossenen oder geöffneten Stellung erfolgt bspw. durch Magnetkraft. In diesem Fall wird das Ventil bzw. das Schließelement in der Offenstellung durch einen Permanentmagneten an dem oberen Polkern gehalten. In analoger Weise wird das Ventil, bzw. das Schließelement, in einer Geschlossenstellung durch diesen Permanentmagneten an dem unteren Polkern gehalten. Vorteilhaft kann hierdurch ein energieeffizientes Halten des Ventils in der jeweiligen Stellung erfolgen.

Ein Wechsel zwischen den beiden stabilen Positionen erfolgt durch eine Bewegung des Schließelements. Hierfür werden die Spulen jeweils mit einer definierten Spannung bestromt. Durch die Bestromung einer Spule entsteht ein Magnetfeld. Die beiden Polkerne bestehen bspw. aus einem Material, welches ferromagnetische Eigenschaften aufweist. Die Magnetfelder magnetisieren daher den oberen und unteren Polkern. Aufgrund ihrer temporären Magnetisierung erzeugen der obere und untere Polkern einen Einfluss auf den Permanentmagneten, so dass das damit verbundene Schließelement in die gewünschte Position bewegt wird. Das Schließelement selbst besteht aus einem nicht-magnetisierbaren Material, insbesondere aus Kunststoff. Zu beachten ist, dass wie bereits ausgeführt das Magnetventil einen oberen Polkern einen unteren Polkern und ein Schließelement mit einer Magnetbaugruppe aufweist. Hieraus, sowie aus der weiteren Beschreibung wird deutlich, dass das Magnetventil keinen Anker im klassischen Sinne aufweist.

Bspw. kann das Schließelement mit dem verbundenen Permanentmagneten (bei einer entsprechenden Position der Komponenten und Bestromung beider Spule) von dem unteren Polkern abgestoßen und von dem oberen Polkern angezogen werden. Oder alternativ bei einer anderen Bestromung der beiden Spulen von dem oberen Polkern abgestoßen und von dem unteren Polkern angezogen werden. Bei Verwendung einer Spulengruppe mit mehr als zwei Spulen kann dieser Effekt durch zwei der Spulen erzeugt werden. Alternativ ist auch denkbar, dass der Effekt durch mehrere, bis zu allen Spulen der Spulengruppe erzielt wird, wobei die Spulgruppe derart ausgestaltet ist, dass die Spulen in vorteilhafter Weise zur Erzielung des gewünschten Ergebnisses zusammenwirken.

In einer konkreten Ausgestaltung sind eine obere und eine untere Spule entgegengesetzt gewickelt. Durch eine gleichgereichte Bestromung der beiden Spulen entstehen zwei unterschiedlich orientierte Magnetfelder. Das Magnetfeld der oberen Spule magnetisiert dabei den näher liegenden oberen Polkern in einer ersten Orientierung. Das Magnetfeld der unteren Spule magnetisiert gleichzeitig den näher liegenden unteren Polkern in einer entgegen gesetzten Orientierung. Bspw. zieht die Magnetisierung des oberen Polkerns den nach oben zeigenden magnetischen Nordpol des Permanentmagneten an. Gleichzeitig stößt die Magnetisierung des unteren Polkerns den nach unten zeigenden magnetischen Südpol des Permanentmagneten ab. Die Spulengruppe ist also so ausgestaltet, dass durch eine Aktivierung der Spulen eine Aktuierung einer Bewegung des Schließelements bewirkt wird. Es erfolgt dabei bspw. eine Bestromung von zwei Spulen, welche beide einen magnetischen Einfluss auf das Schließelement erzeugten und dadurch das Schließelement bewegen. Hierdurch wird die Dynamik und Effizienz des Bewegungsvorgangs erheblich gesteigert. Als hydraulisches Bremssystem wird insbesondere ein hydraulisches Bremssystem für ein Fahrzeug, bspw. für ein Kraftfahrzeug, insbesondere für einen Personenkraftwagen, verstanden.

Vorteilhaft wird durch den beschriebenen Aufbau des Ventils ein hochdynamisches Schalten - auch bei tiefen Temperaturen - ermöglicht. Ebenfalls sind nur noch kurze Stromimpulse zur Schaltung notwendig. Dies ist von hohem Vorteil bei modernen Fahrzeugen. Hierdurch ergibt sich ein effizientes Ventil. Diese Effizienz hat weitreichenden Einfluss auch auf weitere Komponenten. So sind beispielsweise deutlich kleinere Spulen notwendig, bzw. möglich. Hierdurch kann wiederum der Kupfereinsatz reduziert werden und damit die Kosten. Weiterhin können auch Entwärmungsteile, insbesondere im Steuergerät, entfallen oder zumindest kleiner ausgeführt werden. Neben der erhöhten Effizienz zeichnet sich das Magnetventil auch vorteilhaft durch seine Einfachheit aus. Bspw. ist ein sehr einfacher Aufbau mit weniger Komponenten möglich. Dies führt zu einer kostengünstigen und ressourcenoptimierten Herstellung. Auch können Vorteile hinsichtlich eines kleineren Bauraumes erzielt werden.

In einer vorteilhaften Ausführungsform ist das bistabile Magnetventil dadurch gekennzeichnet, dass die Spulen jeweils die Bewegung des Schließelements von einer ersten Position in eine zweite Position und von der zweiten Position in die erste Position unterstützen.

Hierunter wird verstanden, dass eine erste Spule bei einer entsprechenden Bestromung sowohl die Bewegung des Schließelements von einer ersten in eine zweite Position unterstützt, als auch bei einer anderen Bestromung eine Bewegung von der zweiten Position in die erste Position. Ebenso unterstützt bspw. eine zweite Spule bei einer entsprechenden Bestromung sowohl eine Bewegung des Schließelements von einer ersten in eine zweite Position, als auch bei einer anderen Bestromung eine Bewegung von der zweiten in die erste Position. Als erste Position kann bspw. verstanden werden, wenn das Ventil durch den Sitz des Schließelements auf dem Ventilsitz geschlossen ist. Als zweite Position kann verstanden werden, wenn das Ventil durch ein ausgelenktes Schließelement geöffnet ist. Eine Bewegung von erster in zweite Position ist damit eine Öffnungsbewegung. Eine Bewegung von zweiter Position in erste Position entsprechend eine Schließbewegung. Die beschriebene Unterstützung der Bewegung ist in einer vorteilhaften Ausgestaltung als Ermöglichung der Bewegung des Schließelements durch jede Spule zu verstehen. Vorteilhaft kann hierdurch ein hochdynamisches Schalten des Ventils erzielt werden.

In einer möglichen Ausgestaltung ist das bistabile Magnetventil dadurch gekennzeichnet, dass wenigstens zwei Spulen gemeinsam die Bewegung des Schließelements von einer ersten Position in eine zweite Position und von der zweiten Position in die erste Position erwirken.

Hierunter wird verstanden, dass mehrere (oder auch alle vorhandenen) Spulen für den Öffnungsvorgang des Ventils aktiviert werden und diese Spulen jeweils einen Einfluss auf das Schließelement aufweisen. Analog werden die Spulen für den Schließvorgang aktiviert und haben ebenfalls jeweils einen Einfluss auf das Schließelement. Bspw. werden (bei zwei vorhandenen Spulen) beide Spulen bestromt und wirken über das entstehende Magnetfeld auf das Schließelement. Hierbei sei explizit darauf verwiesen, dass die Spulen jeweils einen differenzierbaren Einfluss auf das Schließelement aufweisen, bspw. erwirkt die erste Spule (über eine Magnetisierung des oberen Polkerns) eine anziehende Magnetkraft auf den magnetischen Nordpol des mit dem Schließelement verbundenen Permanentmagneten und die zweite Spule (über eine Magnetisierung des unteren Polkerns) eine abstoßende Magnetkraft auf dessen magnetischen Südpol. Der daraus resultierende Effekt der beiden Spulenkann der gleiche sein, insbesondere die Bewegung des Schließelements zu ermöglichen. Die Aktivierung der beiden Spulen erfolgt hierbei im Wesentlichen gleichzeitig. Ebenfalls ist die Dauer der Aktivierung im Wesentlichen die gleiche. Vorteilhaft kann hierdurch ein kleineres Ventil ermöglicht werden. Dies spart Bauraum im verbauten Zustand sowie Materialkosten, insbesondere Kupfer, bei der Herstellung.

In einer bevorzugten Ausführung ist das bistabile Magnetventil dadurch gekennzeichnet, dass die Spulengruppe derart ausgebildet ist, dass eine erste definierte Aktivierung einer ersten Spule ein Abstoßen des Permanentmagneten von dem oberen Polkern erwirkt und eine erste definierte Aktivierung einer zweiten Spule ein Anziehen des Permanentmagneten von dem unteren Polkern erwirkt und dass eine zweite definierte Aktivierung der ersten Spule ein Abstoßen des Permanentmagneten von dem oberen Polkerne erwirkt und eine zweite definierte Aktivierung der zweiten Spule ein Anziehen des Permanentmagneten von dem unteren Polkern erwirkt.

Unter dem Begriff Aktivierung einer Spule ist insbesondere eine Bestromung mit einer definierter Stromrichtung und Spannung, etc. zu verstehen. Bspw. erfolgt eine erste definierte Aktivierung mit einer definierten positiven Spannung, während eine zweite definierte Aktivierung mit einer definierten negativen Spannung erfolgt. Vorteilhaft wird hierdurch ein effizientes Magnetventil ermöglicht, bei welchem zum Schalten lediglich kurze Stromimpulse notwendig sind.

In einer alternativen Weiterbildung ist das bistabile Magnetventil dadurch gekennzeichnet, dass die Spulen in axialer Richtung des Magnetventils hintereinander positioniert sind.

Hierunter wird verstanden, dass die Spulen in Bewegungsrichtung des Schließelements angeordnet sind. Hierdurch werden bei einer Bewegung des Schließelements unterschiedliche Abstände des Schließelements zu den Spulen realisiert. Die Spulen können dabei als Spulengruppe ausgestaltet sein und eine vormontierbare Komponente darstellen. Eine vormontierte Spulengruppe kann bspw. auf die Führungshülse aufgeschoben werden. Vorteilhaft ergibt sich hierdurch ein einfacher Aufbau des Ventils. Ebenfalls wird hierdurch eine kostengünstige Herstellung des Ventils unterstützt.

In einer vorteilhaften Ausgestaltung ist das bistabile Magnetventil dadurch gekennzeichnet, dass die Spulen unterschiedlich gerichtete Magnetfelder erzeugen.

Hierunter wird verstanden, dass die Spulengruppe derart ausgebildet ist, dass verschiedene Magnetfelder erzeugt werden. Bspw. können zwei Spulen zwei unterschiedlich gerichtete Magnetfelder erzeugen. Insbesondere sind Magnetfelder vorgesehen die 180 Grad versetzt sind; bei welchen also die magnetischen Nordpole und Südpole vertauscht sind. Vorteilhaft wird hierdurch ein hochdynamisches Schalten ermöglicht.

In einer möglichen Ausführung ist das bistabile Magnetventil dadurch gekennzeichnet, dass die Spulen unterschiedlich gerichtete Wicklungen aufweisen.

Hierunter wird verstanden, dass die Spulen der Spulengruppe unterschiedlich gewickelt sind. Bspw. weisen zwei benachbarte Spulen unterschiedliche Wicklungen auf. Die Wicklungen unterscheiden sich insbesondere in der Richtung ihrer Wicklungen. Als unterschiedlich gerichtete Wicklungen zweiter Spulen soll verstanden sein, wenn beim Anlegen einer definierten gleichen Spannung ein unterschiedlich gerichtetes Magnetfeld entsteht. Vorteilhaft wird hierdurch ein einfacher Aufbau des Magnetventils ermöglicht.

In einer bevorzugten Weiterbildung ist das bistabile Magnetventil dadurch gekennzeichnet, dass die Spulen separat ansteuerbar ausgeführt sind.

Hierunter wird verstanden, dass das Ventil und/oder die Spulengruppe derart ausgestaltet sind, dass die einzelnen Spulen individuell ansteuerbar sind. Bspw. sind Kontaktierungen für jede einzelne Spule vorgesehen. Vorteilhaft kann hierdurch mit einer einfachen Ansteuerung ein hochdynamisches Schalten ermöglicht werden.

In einer alternativen Ausführungsform hält der Permanentmagneten das Schließelement in einer ersten stationären Position an dem unteren Polkern, bzw. in einer zweiten stationären Position an dem oberen Polkern.

Erfindungsgemäß ist weiterhin ein Verfahren zur Steuerung eines bistabilen Magnetventils für ein hydraulisches Bremssystem, mit einer Führungshülse in welche ein oberer und ein unterer unbewegter Polkern fest und ein Schließelement verlagerbar angeordnet ist, wobei das Schließelement während einer Schließbewegung in einen Ventilsitz drängt und während einer Öffnungsbewegung aus dem Ventilsitz abhebt und das Schließelement mit einem Permanentmagneten fest verbunden ist wobei der Permanentmagnet zwischen dem unteren und dem oberen Polkern positioniert ist und die Spulengruppe um die Führungshülse positioniert ist und diese im Wesentlichen umfasst, vorgesehen, welches dadurch gekennzeichnet ist, dass die Spulengruppe wenigstens zwei Spulen umfasst, wobei mittels einer Aktivierung der wenigstens zwei Spulen eine Bewegung des Schließelements aktuiert wird.

Unter dem Begriff Aktivierung einer Spule wird verstanden, dass eine Ansteuerung der Spule erfolgt. Diese Ansteuerung kann mittels eine Bestromung mit einer definierten Spannung, Stromstärke und Polung erfolgen. Hierbei ist vorgesehen, dass wenigstens zwei Spulen der Spulengruppe aktiviert werden. Die Bewegung des Schließelements erfolgt folglich bspw. unter dem Einfluss von zwei aktivierten Spulen. Vorteilhaft kann hierdurch ein hochdynamisches Schalten sowie ein effizientes Schalten ermöglicht werden.

In einer vorteilhaften Ausführungsform ist das Verfahren dadurch gekennzeichnet, dass die wenigstens zwei Spulen aktiviert werden, um das Schließelement von einer ersten in eine zweite Position zu bringen. Hierunter ist zu verstehen, dass die Spulen gemeinsam aktiviert werden, um die Bewegung des Schließelements zu ermöglichen. Vorteilhaft kann hierdurch eine hohe Leistung auch bei kleinen Spulen ermöglicht werden. Hierdurch können Materialkosten, bspw. Kupfer, eingespart werden.

In einer möglichen Weiterbildung ist das Verfahren zur Steuerung eines bistabilen Magnetventils dadurch gekennzeichnet, dass die Aktivierung der wenigstens zwei Spulen im Wesentlichen gleichzeitig erfolgt und/oder die Ansteuerzeit der wenigstens zwei Spulen im Wesentlichen gleich lang ist. Vorteilhaft kann hierdurch ein hochdynamisches Schalten des Ventils auch bei niedrigen Temperaturen ermöglicht werden.

In einer bevorzugten Ausführung ist das Verfahren zur Steuerung eines bistabilen Magnetventils dadurch gekennzeichnet, dass die Aktivierung der Spulen mit entgegengesetzter Stromrichtung erfolgt, wenn die Wicklungen der Spulen gleichgerichtet sind und/oder die Aktivierung der Spulen mit gleicher Stromrichtung erfolgt, wenn die Wicklungen der Spulen gegenläufig sind.

Hierunter wird verstanden, dass verschiedene Möglichkeiten zum strukturellen Aufbau des Ventils als auch dessen Ansteuerung vorgesehen sind. Vorteilhaft ist die Struktur und Steuerung des Ventils aufeinander abzustimmen. Vorteilhaft kann hierdurch ein einfaches Gesamtkonzept ermöglicht werden. In besonders vorteilhafter Weise kann bei gegenläufig gewickelten Spulen eine Ansteuerung beider Spulen mit gleicher Stromrichtung und Stärke erfolgen. Denkbar ist hierfür, dass weiterhin eine Kontaktierung für beide Spulen ausreichend ist. Eine differenzierte Bestromung der beiden Spulen führt hingegen zu baulichem Mehraufwand, insbesondere bzgl. Kontaktierung, ermöglicht aber auch die individuelle Ansteuerung jeder einzelnen Spule.

In einer möglichen Weiterbildung ist das Verfahren zur Steuerung eines bistabilen Magnetventils dadurch gekennzeichnet, dass die Ansteuerung wenigstens einer Spule der wenigstens zwei Spulen während der Öffnungsbewegung und/oder während der Schließbewegung derartig geändert wird, dass ein Anschlagsimpuls von dem Schließelement an den jeweiligen Polkern reduziert wird.

Hierunter wird verstanden, dass durch eine Änderung der Ansteuerung während der Bewegung des Schließelementes das Geräuschverhalten verbessert werden kann. Magnetventile erzeugen beim Schalten ein Geräusch, das entsteht, wenn durch die Bestromung der Magnetspule der Luftspalt geschlossen wird und der Anker auf den Polkern trifft. Da die Magnetkraft mit kleiner werdendem Luftspalt überproportional ansteigt ist die Beschleunigung im Moment des Auftreffens maximal. Das durch den Auftreffimpuls verursachte Klickgeräusch wird von den Fahrzeugherstellern als störend bewertet. Die Ausgestaltung ermöglicht ein Vermeiden oder zumindest eine Verringerung des beschriebenen Effektes. Durch eine entsprechend Ansteuerung der beiden Magnetspulen kann vor dem Auftreffen des bewegten Ankers auf den stehenden Polkern eine der Bewegungsrichtung entgegengesetzte Kraft erzeugt werden, die den Anker abbremst und so den Auftreffimpuls reduziert oder ggf. sogar verhindert. Über unterschiedliche Ansteuerzeiten, Polungen und Stromstärken lassen sich für die unterschiedlichen Magnetventile und Verwendungszwecke angepasste Lösungen zur NVH-Optimierung definieren. Hierbei ist auch denkbar, eine Spule in Gegenrichtung zu bestromen, um eine Magnetkraft zu erzeugen, die der aktuellen Bewegung des Schließelements entgegen wirkt um die Bewegung des Schließelements kurz vor dem Anschlagen zu dämpfen. Die Änderung der Ansteuerung kann sich dabei auf nur eine der Spulen beziehen. Denkbar ist auch dass die Ansteuerung von mehreren Spulen oder alle Spulen während des Bewegungsprozesses variiert werden

### Ausführungsformen

Es ist darauf hinzuweisen, dass die in der Beschreibung einzeln aufgeführten Merkmale in beliebiger, technisch sinnvoller Weise miteinander kombiniert werden können und weitere Ausgestaltungen der Erfindung aufzeigen. Weitere Merkmale und Zweckmäßigkeit der Erfindung ergeben sich aus der Beschreibung von Ausführungsbeispielen anhand der beigefügten Figuren.

Von den Figuren zeigt:
Fig. 1 eine schematische Schnittansicht eines bistabilen Magnetventil gemäß einer Ausführungsform der Erfindung; und
Fig. 2 eine Prinzip-Skizze der Wirkkräfte und Bewegungen bei unterschiedlicher Bestromung gemäß einer Ausführungsform der Erfindung; und.
Fig. 3 eine Darstellung eines Verfahrens zur Steuerung eines bistabilen Magnetventil gemäß einer Ausführungsform der Erfindung.

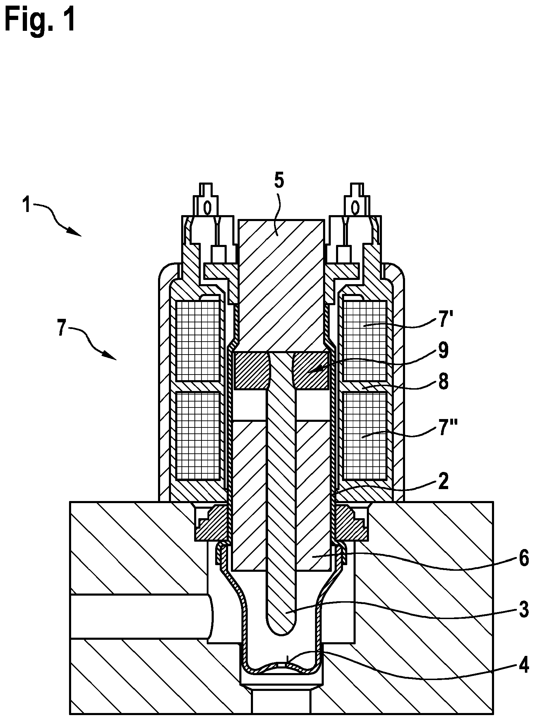

Fig. 1 zeigt eine schematische Schnittansicht eines bistabilen Magnetventils. Das Magnetventil 1 weist dabei eine Führungshülse 2 auf. In dieser Führungshülse 2 ist ein oberer Polkern 5 und ein unterer Polkern 6 verankert. Weiterhin ist in der Führungshülse 2 ein Schließelement 3 beweglich positioniert. Mit diesem Schließelement 3 fest verbunden ist eine Magnetbaugruppe bestehend aus einem Permanentmagneten 9. Der Permanentmagnet 9 ist hierzu an das Schließelement 3 angespritzt. Weiterhin besteht eine Spulengruppe 7. Die Spulengruppe 7 besteht aus zwei Spulen 7'und 7". Die beiden Spulen 7'und 7" sind durch eine Isolierung 8 getrennt voneinander. Die Spulengruppe 7 ist dabei um die Führungshülse 2 positioniert. In dieser Ausführung ist die Spule 7 auf die Führungshülse 2 aufgeschoben. Die Spule 7 umfasst die Führungshülse 2 vollumfänglich. Die Länge der Spule 7, bzw. die Position des oberen Polkerns 5 und unteren Polkerns 6 sind so gewählt, bzw. aufeinander abgestimmt, dass die Spule 7 den oberen Polkern 5 und unteren Polkern 6 zumindest teilweise umfasst. Die Polkerne 5, 6 werden aufgrund ihrer Funktion auch als Magnetfeldleitkörper bezeichnet. Die Polkerne 5, 6 ragen dabei jeweils in die zugehörige Erregerspule 7', 7" der Spulengruppe 7 hinein und füllen die Erregerspulen 7', 7" auf einen Teil ihrer Länge aus. Das Schließelement 3 wirkt in einer unteren Position mit dem Ventilsitz 4 dichtend zusammen. Bei einer Auslenkung aus dieser Position gibt das Schließelement 3 den Ventilsitz 4 frei und ermöglicht den Fluss eines hydraulischen Mediums, wie in der Fig. 1 dargestellt. Das Schließelement 3 läuft dabei durch ein Loch in dem unteren Polkern 6 und wird hierdurch geführt.

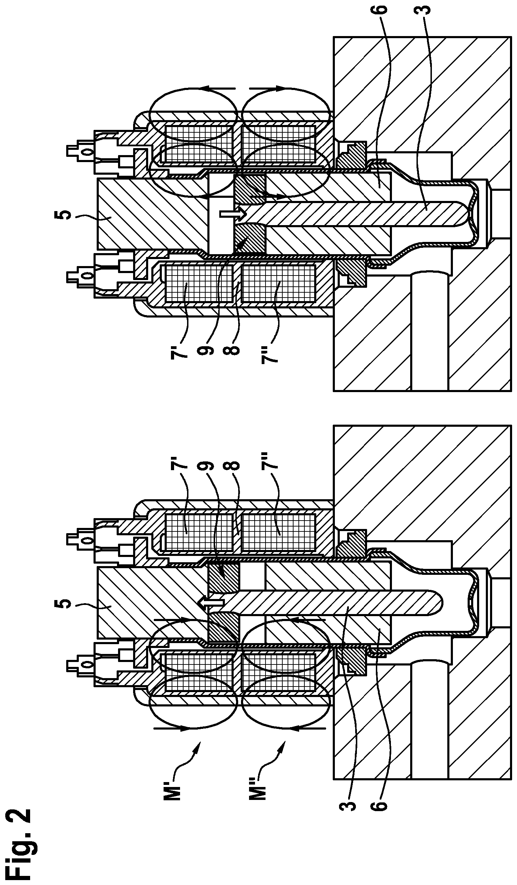

Fig. 2 zeigt eine Prinzip-Skizze der Wirkkräfte und Bewegungen bei unterschiedlicher Bestromung. Die linke Darstellung zeigt dabei die Magnetfelder und Wirkkräfte bei einer ersten Bestromung der beiden Spulen 7' und 7". Die beiden Spulen sind in der dargestellten Ausführung gegenläufig gewickelt. Hierbei wird mittels Anlegen einer definierten ersten (bspw. positiven) Spannung an die erste Spule 7' ein polarisiertes Magnetfeld erzeugt. Die dargestellte ovale Linie zeigt beispielhaft eine Magnetfeldlinie M. Durch dieses Magnetfeld, wird auch der obere Polkern 5 magnetisiert. Durch Anlegen einer definierten ersten (bspw. positiven) Spannung an die zweite Spule 7" wird ebenfalls ein polarisiertes Magnetfeld erzeugt. Die dargestellte ovale Linie zeigt beispielhaft eine Magnetfeldlinie M". Durch dieses Magnetfeld, wird der unter Polkern 6 magnetisiert. Aufgrund der gegenläufigen Wicklungen sind die entstehenden Magnetfelder ebenfalls gegenläufig. Ebenso sind die Magnetisierungen des oberen Polkerns 5 und des unteren Polkerns 6 gegensätzlich gerichtet. Die Magnetisierung der Polkerne (sowie das durch die Spulen 7' und 7" erzeugte Magnetfeld) führt zu einer Wechselwirkung mit dem Permanentmagneten 9. Beispielsweise wird der Permanentmagnet 9 (bzw. bspw. der untere magnetische Südpol) durch den polarisiert magnetisierten unteren Polkern 6 abgestoßen. Gleichzeitig wird der Permanentmagnet 9 (bzw. bspw. der obere magnetische Nordpol) durch den polarisiert magnetisierten oberen Polkern 5 angezogen. Hierdurch ergibt sich eine Bewegung des axial beweglichen Permanentmagneten sowie des damit fest verbundenen Schließelements 3 in die obere Position. Diese Kraft sowie daraus folgende Bewegung ist durch den nach oben gerichteten Pfeil dargestellt. In der oberen Position wird das Schließelement 3 durch die Magnetkraft des Permanentmagneten 9 auch nach einer Wegnahme der Bestromung der Spulen 7' und 7" gehalten. Das Magnetventil 1 befindet sich damit in einem stabilen geöffneten Zustand.

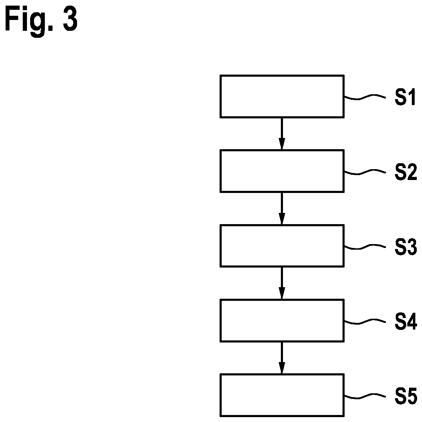

Die rechte Darstellung der Fig. 3 zeigt weiterhin die Magnetfelder und Wirkkräfte bei einer zweiten Bestromung. Hierbei wird mittels Anlegen einer definierten zweiten (bspw. negativen) Spannung an die erste Spule 7' ein in Bezug auf die erste definierte Spannung entgegen gesetzt polarisiertes Magnetfeld erzeugt. Ebenfalls wird durch Anlegen einer definierten zweiten (bspw. negativen) Spannung an die zweite Spule 7" ebenfalls ein in Bezug auf die erste definierte Spannung entgegen gesetzt polarisiertes Magnetfeld erzeugt. Die dargestellten, ovalen Linien zeigen beispielhafte Magnetfeldlinien. In analoger Weise zu der bisherigen Beschreibung wird der Permanentmagnet 9 (genau genommen der untere magnetische Südpol) durch den entgegengesetzt polarisiert magnetisierten oberen Polkern 5 angezogen. Gleichzeitig wird der Permanentmagnet 9 (genau genommen der obere magnetische Nordpol) durch den entgegengesetzt polarisiert magnetisierten unteren Polkern 6 abgestoßen. Hierdurch ergibt sich eine Bewegung des axial beweglichen Permanentmagneten 9 sowie des damit fest verbundenen Schließelements 3 in die untere Position. In der unteren Position wird das Schließelement 3 durch die Magnetkraft des Permanentmagneten 9 auch nach einer Wegnahme der Bestromung der Spulen 7' und 7" gehalten. Das Magnetventil 1 befindet sich damit in einem stabilen geschlossenen Zustand.

Fig. 3 zeigt weiterhin eine Darstellung eines Verfahrens zur Steuerung eines bistabilen Magnetventils gemäß einer Ausführungsform der Erfindung. Hierbei erfolgt in einem ersten Schritt S1 das Halten des Schließelements in einer ersten Position mittels Magnetkraft an einem Polkern. Hierfür weist das Schließelement bspw. einen Permanentmagneten auf. In einem zweiten Schritt S2 erfolgt eine im Wesentlichen gleichzeitige Aktivierung der ersten und zweiten Spule. Bei gegenläufig gewickelten Spulen erfolgt die Aktivierung beider Spulen durch eine gleichgerichtete Bestromung. Hierdurch entstehen in beiden Spulen unterschiedlich orientierte Magnetfelder. Diese Magnetfelder führen zu einer Magnetisierung der Polkerne. Dies führt in einem Schritt S3 zu einer Bewegung des Schließelements von der ersten Position in eine zweite Position. Ist die gewünschte zweite Position erreicht, erfolgt in einem Schritt S4 eine Deaktivierung der beiden Spulen. Im Anschluss erfolgt weiterhin ein Halten des Schließelement in mittels Magnetkraft an dem zweiten Polkern.

## Patentansprüche

1. Bistabiles Magnetventil (1) für ein hydraulisches Bremssystem, mit einer Führungshülse (2) in welche ein Schließelement (3) verlagerbar angeordnet ist, wobei das Schließelement (3) während einer Schließbewegung in einen Ventilsitz (4) drängt und während einer Öffnungsbewegung aus dem Ventilsitz (4) abhebt und das Schließelement (3) mit einem Permanentmagneten (9) fest verbunden ist wobei der Permanentmagnet (9) zwischen einem unteren und einem oberen unbewegten Polkern (5, 6) positioniert ist und eine Spulengruppe (7), welche um die Führungshülse (2) positioniert ist und diese im Wesentlichen umfasst, wobei, die Spulengruppe (7) wenigstens zwei Spulen (7', 7") umfasst, wobei die Spulengruppe (7) so ausgestaltet ist, dass mittels einer Aktivierung der wenigstens zwei Spulen (7', 7") eine Aktuierung einer Bewegung des Schließelements (3) erfolgt, **dadurch gekennzeichnet, dass** der obere und der untere unbewegte Polkerne (5,6) in die Führungshülse fest angeordnet sind.

2. Bistabiles Magnetventil (1) nach Anspruch 1, **dadurch gekennzeichnet, dass** die Spulen (7', 7") jeweils die Bewegung des Schließelements (3) von einer ersten Position in eine zweite Position und von der zweiten Position in die erste Position unterstützen.

3. Bistabiles Magnetventil (1) nach einem der vorhergehenden Ansprüche, **dadurch gekennzeichnet, dass** wenigstens zwei Spulen (7', 7") gemeinsam die Bewegung des Schließelements (3) von einer ersten Position in eine zweite Position und von der zweiten Position in die erste Position erwirken.

4. Bistabiles Magnetventil (1) nach einem der vorhergehenden Ansprüche, **dadurch gekennzeichnet, dass** die Spulengruppe (7) derart ausgebildet ist, dass eine erste definierte Aktivierung einer ersten Spule (7') ein Abstoßen des Permanentmagneten (9) von dem oberen Polkern (5) erwirkt und eine erste definierte Aktivierung einer zweiten Spule (7") ein Anziehen des Permanentmagneten (9) von dem unteren Polkern (6) erwirkt
und dass eine zweite definierte Aktivierung der ersten Spule (7') ein Abstoßen des Permanentmagneten (9) von dem oberen Polkerne (5) erwirkt und eine zweite definierte Aktivierung der zweiten Spule (7") ein Anziehen des Permanentmagneten (9) von dem unteren Polkern (6) erwirkt.

5. Bistabiles Magnetventil (1) nach einem der vorhergehenden Ansprüche, **dadurch gekennzeichnet, dass** die Spulen (7', 7") in axialer Richtung des Magnetventils (1) hintereinander positioniert sind.

6. Bistabiles Magnetventil (1) nach einem der vorhergehenden Ansprüche, **dadurch gekennzeichnet, dass** die Spulen (7', 7") unterschiedlich gerichtete Magnetfelder erzeugen.

7. Bistabiles Magnetventil (1) nach einem der vorhergehenden Ansprüche, **dadurch gekennzeichnet, dass** die Spulen (7', 7") unterschiedlich gerichtete Wicklungen aufweisen.

8. Bistabiles Magnetventil (1) nach einem der vorhergehenden Ansprüche, **dadurch gekennzeichnet, dass** die Spulen (7', 7") separat ansteuerbar ausgeführt sind.

9. Verfahren zur Steuerung eines bistabilen Magnetventils (1) für ein hydraulisches Bremssystem, mit einer Führungshülse (2) in welche ein Schließelement (3) verlagerbar; angeordnet ist,
wobei das Schließelement (3) während einer Schließbewegung in einen Ventilsitz (4) drängt und während einer Öffnungsbewegung aus dem Ventilsitz (4) abhebt und das Schließelement (3) mit einem Permanentmagneten (9) fest verbunden ist wobei der Permanentmagnet (9) zwischen einem unteren und einem oberen Polkern (5, 6) positioniert ist und eine Spulengruppe (7) um die Führungshülse (2) positioniert ist und diese im Wesentlichen umfasst, wobei die Spulengruppe (7) wenigstens zwei Spulen (7', 7") umfasst, wobei mittels einer Aktivierung der wenigstens zwei Spulen (7', 7") eine Bewegung des Schließelements (3) aktuiert wird, **dadurch gekennzeichnet, dass** der obere und der untere unbewegte Polkern (5,6) in die Führungshülse fest angeordnet sind.

10. Verfahren zur Steuerung eines bistabilen Magnetventils (1) nach Anspruch 9, **dadurch gekennzeichnet, dass** die Aktivierung der wenigstens zwei Spulen (7', 7") im Wesentlichen gleichzeitig erfolgt und/oder die Ansteuerzeit der wenigstens zwei Spulen (7', 7") im Wesentlichen gleich lang ist.

11. Verfahren zur Steuerung eines bistabilen Magnetventils (1) nach Anspruch 9 bis 10, **dadurch gekennzeichnet, dass** die Aktivierung der Spulen (7', 7") mit entgegengesetzter Stromrichtung erfolgt, wenn die Wicklungen der Spulen (7', 7") gleichgerichtet sind und/oder die Aktivierung der Spulen (7', 7") mit gleicher Stromrichtung erfolgt, wenn die Wicklungen der Spulen (7', 7") gegenläufig sind.

12. Verfahren zur Steuerung eines bistabilen Magnetventils (1) nach Anspruch 9 bis 11, **dadurch gekennzeichnet, dass** die Ansteuerung wenigstens einer Spule (7', 7") der wenigstens zwei Spulen (7', 7") während der Öffnungsbewegung und/oder während der Schließbewegung derartig geändert wird, dass ein Anschlagsimpuls von dem Schließelement (3) an den jeweiligen Polkern (5, 6) reduziert wird.

## Claims

1. Bistable solenoid valve (1) for a hydraulic brake system, comprising a guide sleeve (2) in which a closing element (3) is arranged in a movable manner, wherein the closing element (3) enters a valve seat (4) during a closing movement and lifts out of the valve seat (4) during an opening movement, and the closing element (3) is connected to a permanent magnet (9) in a fixed manner, wherein the permanent magnet (9) is positioned between a lower and an upper non-moving pole core (5, 6), and a coil group (7) which is positioned around the guide sleeve (2) and substantially encloses said guide sleeve, wherein the coil group (7) comprises at least two coils (7', 7"), wherein the coil group (7) is configured such that actuation of a movement of the closing element (3) takes place by means of activation of the at least two coils (7', 7''), **characterized in that** the upper and the lower non-moving pole cores (5, 6) are arranged in the guide sleeve in a fixed manner.

2. Bistable solenoid valve (1) according to Claim 1, **characterized in that** the coils (7', 7") each assist the movement of the closing element (3) from a first position to a second position and from the second position to the first position.

3. Bistable solenoid valve (1) according to either of the preceding claims, **characterized in that** at least two coils (7', 7") jointly cause the movement of the closing element (3) from a first position to a second position and from the second position to the first position.

4. Bistable solenoid valve (1) according to one of the preceding claims, **characterized in that** the coil group (7) is designed in such a way that a first defined activation of a first coil (7') causes repelling of the permanent magnet (9) by the upper pole core (5) and a first defined activation of a second coil (7") causes attraction of the permanent magnet (9) by the lower pole core (6), and **in that** a second defined activation of the first coil (7') causes repelling of the permanent magnet (9) by the upper pole core (5) and a second defined activation of the second coil (7") causes attraction of the permanent magnet (9) by the lower pole core (6).

5. Bistable solenoid valve (1) according to one of the preceding claims, **characterized in that** the coils (7', 7'') are positioned one behind the other in the axial direction of the solenoid valve (1).

6. Bistable solenoid valve (1) according to one of the preceding claims, **characterized in that** the coils (7', 7") generate magnetic fields of different orientation.

7. Bistable solenoid valve (1) according to one of the preceding claims, **characterized in that** the coils (7', 7") have windings of different orientation.

8. Bistable solenoid valve (1) according to one of the preceding claims, **characterized in that** the coils (7', 7'') are designed such that they can be driven separately.

9. Method for controlling a bistable solenoid valve (1) for a hydraulic brake system, comprising a guide sleeve (2) in which a closing element (3) is arranged in a movable manner, wherein the closing element (3) enters a valve seat (4) during a closing movement and lifts out of the valve seat (4) during an opening movement, and the closing element (3) is connected to a permanent magnet (9) in a fixed manner, wherein the permanent magnet (9) is positioned between a lower and an upper pole core (5, 6), and a coil group (7) is positioned around the guide sleeve (2) and substantially encloses said guide sleeve, wherein the coil group (7) comprises at least two coils (7', 7''), wherein a movement of the closing element (3) is actuated by means of activation of the at least two coils (7', 7''), **characterized in that** the upper and the lower non-moving pole cores (5, 6) are arranged in the guide sleeve in a fixed manner.

10. Method for controlling a bistable solenoid valve (1) according to Claim 9, **characterized in that** the activation of the at least two coils (7', 7") takes place substantially simultaneously and/or the driving time of the at least two coils (7', 7") is of substantially the same length.

11. Method for controlling a bistable solenoid valve (1) according to Claims 9 and 10, **characterized in that** the activation of the coils (7', 7") takes place with an opposite current direction when the windings of the coils (7', 7") are of the same orientation and/or the activation of the coils (7', 7") takes place with the same current direction when the windings of the coils (7', 7") are opposed.

12. Method for controlling a bistable solenoid valve (1) according to Claims 9 to 11, **characterized in that** the driving of at least one coil (7', 7") of the at least two coils (7', 7") is changed during the opening movement and/or during the closing movement in such a way that an impact momentum of the closing element (3) against the respective pole core (5, 6) is reduced.

## Revendications

1. Electrovanne bistable (1) pour un système de freinage hydraulique, comprenant une douille de guidage (2) dans laquelle un élément de fermeture (3) est disposé de manière déplaçable,
dans laquelle l'élément de fermeture (3) se presse dans un siège de vanne (4) pendant un mouvement de fermeture et se soulève du siège de vanne (4) pendant un mouvement d'ouverture, et l'élément de fermeture (3) est relié solidement à un aimant permanent (9),
l'aimant permanent (9) étant positionné entre un noyau polaire (5, 6) immobile inférieur et supérieur, et un groupe de bobines (7) est positionné autour de la douille de guidage (2) et l'entoure substantiellement,
le groupe de bobines (7) comprenant au moins deux bobines (7', 7"), le groupe de bobines (7) étant configuré de telle sorte qu'au moyen d'une activation des au moins deux bobines (7', 7"), un actionnement d'un mouvement de l'élément de fermeture (3) est effectué,
**caractérisée en ce que** les noyaux polaires (5, 6) immobiles, supérieur et inférieur, sont disposés solidement dans la douille de guidage.

2. Electrovanne bistable (1) selon la revendication 1, **caractérisée en ce que** les bobines (7', 7") assistent respectivement le mouvement de l'élément de fermeture (3) d'une première position à une deuxième position et de la deuxième position à la première position.

3. Electrovanne bistable (1) selon l'une quelconque des revendications précédentes, **caractérisée en ce qu'**au moins deux bobines (7', 7") provoquent ensemble le mouvement de l'élément de fermeture (3) d'une première position à une deuxième position et de la deuxième position à la première position.

4. Electrovanne bistable (1) selon l'une quelconque des revendications précédentes, **caractérisée en ce que** le groupe de bobines (7) est réalisé de telle sorte qu'une première activation définie d'une première bobine (7') fait que l'aimant permanent (9) est repoussé par le noyau polaire supérieur (5), et une première activation définie d'une deuxième bobine (7") fait que l'aimant permanent (9) est attiré par le noyau polaire inférieur (6),
et **en ce qu'**une deuxième activation définie de la première bobine (7') fait que l'aimant permanent (9) est repoussé par le noyau polaire supérieur (5), et une deuxième activation définie de la deuxième bobine (7") fait que l'aimant permanent (9) est attiré par le noyau polaire inférieur (6).

5. Electrovanne bistable (1) selon l'une quelconque des revendications précédentes, **caractérisée en ce que** les bobines (7', 7") sont positionnées les unes après les autres dans la direction axiale de l'électrovanne (1) .

6. Electrovanne bistable (1) selon l'une quelconque des revendications précédentes, **caractérisée en ce que** les bobines (7', 7") produisent des champs magnétiques d'orientations différentes.

7. Electrovanne bistable (1) selon l'une quelconque des revendications précédentes, **caractérisée en ce que** les bobines (7', 7") présentent des enroulements d'orientations différentes.

8. Electrovanne bistable (1) selon l'une quelconque des revendications précédentes, **caractérisée en ce que** les bobines (7', 7") sont réalisées pour pouvoir être excitées séparément.

9. Procédé de commande d'une électrovanne bistable (1) pour un système de freinage hydraulique, comprenant une douille de guidage (2) dans laquelle un élément de fermeture (3) est disposé de manière déplaçable,
dans lequel l'élément de fermeture (3) se presse dans un siège de vanne (4) pendant un mouvement de fermeture et se soulève du siège de vanne (4) pendant un mouvement d'ouverture, et l'élément de fermeture (3) est relié solidement à un aimant permanent (9),
l'aimant permanent (9) étant positionné entre un noyau polaire (5, 6), inférieur et supérieur, et un groupe de bobines (7) est positionné autour de la douille de guidage (2) et l'entoure substantiellement,
le groupe de bobines (7) comprenant au moins deux bobines (7', 7"), dans lequel, au moyen d'une activation des au moins deux bobines (7', 7"), un mouvement de l'élément de fermeture (3) est actionné,
**caractérisé en ce que** les noyaux polaires (5, 6) immobiles, supérieur et inférieur, sont disposés solidement dans la douille de guidage.

10. Procédé de commande d'une électrovanne bistable (1) selon la revendication 9, **caractérisé en ce que** l'activation des au moins deux bobines (7', 7") est effectuée substantiellement en même temps et/ou le temps d'excitation des au moins deux bobines (7', 7") est substantiellement de longueur identique.

11. Procédé de commande d'une électrovanne bistable (1) selon les revendications 9 à 10, **caractérisé en ce que** l'activation des bobines (7', 7") est effectuée avec un sens du courant opposé lorsque les enroulements des bobines (7', 7") sont redressés, et/ou l'activation des bobines (7', 7") est effectuée avec le même sens du courant lorsque les enroulements des bobines (7', 7") sont enroulés en sens opposé.

12. Procédé de commande d'une électrovanne bistable (1) selon les revendications 9 à 11, **caractérisé en ce que** l'excitation d'au moins une bobine (7', 7") des au moins deux bobines (7', 7") pendant le mouvement d'ouverture et/ou pendant le mouvement de fermeture est modifiée de telle sorte qu'une impulsion d'impact de l'élément de fermeture (3) contre le noyau polaire (5, 6) respectif est réduite.
